# EUROPEAN PATENT APPLICATION

(11) **EP 3 499 670 A1**
(43) Date of publication of application: **19.06.2019**
(21) Application number: 17460076.7
(22) Date of filing: 18.12.2017
(51) Int. Cl.: H02H 9/04, H02H 7/04

(54) **CROWBAR OVERVOLTAGE PROTECTION WITH CURRENT LIMITING FUNCTION**

(71) Applicant: ABB Schweiz AG, 5400 Baden (CH)
(72) Inventor: Aloszko, Pawel, 31-421 Krakow (PL); Grecki, Filip, 31-421 Krakow (PL); Ostrogorska, Magdalena, 30-199 Rzaska (PL); Piasecki, Wojciech, 31-347 Krakow (PL)
(74) Representative: Chochorowska-Winiarska, Krystyna

(57) **Abstract**

The present invention relates to an overvoltage protection circuit for power electronic devices. The circuit comprises a thermistor being either a positive temperature coefficient thermistor (PTC) or a polymer fuse (CTR). The thermistor is connected in series with a thyristor crowbar circuit, a triac crowbar circuit or a breakover diode crowbar circuit. Such arrangement provides a new way of overvoltage protection to power electronic devices such as power electronic tap changers or power supplies.

## Description

### Technical field

The present invention relates to an overvoltage protection circuit for power electronic devices, especially to power electronic tap changers and power supplies.

### Background art

Traditional means of protection against overvoltage include standard MOV (Metal Oxide Varistor), TVS (Transient-voltage-suppression) diode, spark-gaps and crowbar circuits.

In some power electronic protection applications, it is not acceptable to use traditional crowbar as it causes a short circuit for longer period of time than standard BIL (Basic Insulation Level) impulse time or in general for the overvoltage duration. Crowbars are most commonly based on thyristors (also called SCRs or Silicon Control Rectifiers) or triacs, which create a short circuit for at least one half cycle of a 50Hz (60Hz) sinewave. Moreover crowbar applications are not compatible with DC lines / devices due to current latching effect.

A very specific example is a power electronic tap changer. Due to connection to transformer's taps, triggering of a crowbar results in a short circuit (loop) current, which flows, even when the disturbance (overvoltage pulse) is not present anymore.

Known passive components such as TVS diodes have too low current rating to be used in medium voltage equipment, or - like standard MOVs - degrade after each triggering.

JP 2006304557 A discloses a combination of an overcurrent protection circuit and an overvoltage protection circuit. The overcurrent protection circuit includes a PTC thermistor and a relay contact for suppressing overcurrent passed through a power supply line for transmitting and supplying power from the alternating-current power supply. The PTC thermistor and the relay contact are connected in parallel with the power supply line. In turn, the overvoltage protection circuit includes a varistor, that short-circuits electric pathways on both sides thereof when an overvoltage is applied across both sides, is connected between a secondary-side electric pathway of a fuse inserted into the power supply line and a power supply terminal. The presented solution is designed for specific power supply setups. The circuit requires use of a mechanical relay to bypass the overcurrent protection element PTC and connect or disconnect the power supply input. The overvoltage conditions are not bypassed and directly stress the varistor. The solution therefore relies on disconnection of power supply at overcurrent conditions and do not limit the energy handled by the varistor.

JP 2007189844 A discloses a circuit board tester, including a drive system voltage line and a control system voltage line as well as at least one input/output signal line. The signal line is shortened to the ground via a PTC thermistor, which is connected to an overvoltage protective circuit, including a parallel arrangement of a signal line short-circuiting transistor and a voltage-monitoring Zener diode. In the presented solution, a transistor voltage limiting circuit is used, which stabilizes the voltage at device 1000 input at overvoltage conditions, but does not make a bypass like crowbar circuit. The series connection of PTC element T introduces additional power losses to the circuit. The presented protection solution is unidirectional, understood as applicable for DC signal only and for one direction of power flow.

### Summary of the invention

The objective problem solved by the present invention can be thus formulated as providing a new way of overvoltage protection circuit for power electronic devices, allowing to overcome the above-mentioned problems in a simple and cost-effective manner, by providing an overvoltage protection circuit of extended lifetime, increased current rating and enabling DC line protection by elimination of current latching effect.

Consequently, the present invention relates to an overvoltage protection circuit for power electronic devices, the circuit comprising a thermistor being either a positive temperature coefficient thermistor (PTC) or a polymer fuse (CTR). The thermistor is connected in series with a thyristor crowbar circuit, a triac crowbar circuit or a breakover diode crowbar circuit.

Such overvoltage protection circuit design allows to limit the duration of short circuit conditions created by a crowbar, to increase the circuit's lifetime (especially when compared to MOVs), to increase current rating for overvoltage protection and to provide effective overvoltage protection of DC lines. In short, the circuit of the present invention combines crowbar circuit functionality with time-dependent current limiting provided by the PTC or CTR. Namely, an overvoltage triggers the crowbar circuit, and after a period defined by heating of the PTC element the current flowing through protection circuit is limited.

The present invention provides a new overvoltage protection for power electronic components, such as in particular a power electronic tap changers or power supplies, since it eliminates short circuit currents between taps.

The invention is applicable also as input protection for power supplies and transformers, exposed to frequent overvoltage conditions, especially in power distribution grid or industrial environment.

### Brief description of drawings

Preferred embodiments of the present invention are presented in a more detailed manner with reference to the attached drawing, in which:
- Fig. 1: is a basic scheme of the overvoltage protection circuit according to the present invention;
- Fig. 2: is a chart showing the behavior of the overvoltage protection circuit according to the present invention;
- Fig. 3: is a scheme of a power electronic tap changer using the overvoltage protection circuits according to the present invention;
- Fig. 4: is a scheme of a power supply using the overvoltage protection circuit according to the present invention.

### Detailed description of preferred embodiments

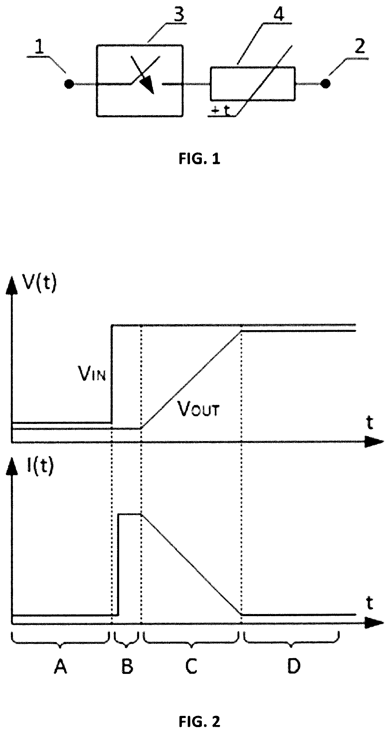

As shown in fig. 1, the overvoltage protection circuit according to the present invention between two main contacts **1, 2** comprises a PTC element **4** connected in series to a thyristor crowbar circuit **3.**

Once an overvoltage occurs the circuit according to the present invention acts as a normal crowbar-based overvoltage protection for a specified period of time. This period is at least as long as a standard surge pulse. Then, as the PTC element's **4** resistance increases due to fault current flow and heating of the PTC element **4**, the current is limited. This prevents short circuiting and enables the thyristor crowbar circuit **3** to be restored from its conductive state to its "idle" state.

Fig. 2 illustrates the sequence of operation of the overvoltage protection circuit according to the invention. The first step is a normal operation **A**, when no overvoltage occurs at terminals. At this stage the circuit according to the invention is "transparent" i.e. with negligible current flow being observed between the terminals. The second step **B** is when an overvoltage occurs, triggering the overvoltage protection **B**. The circuit according to the invention clamps the voltage between the terminals almost to zero, with the current rise being proportional to load impedance of the external circuit. The duration of the overvoltage protection stage **B** is sufficient for the circuit to clamp the terminals. The next step is current limitation **C**. At this stage the overvoltage still exists, but with the increase of the PTC temperature the clamping current is limited to a predetermined fixed value, and the voltage on terminals increases. Should the overvoltage still exist, the circuit according to the invention becomes transparent (step **D**). This event should trigger additional overvoltage protection means such as classic MOVs. If not, the second step **B** is repeated after cooling down of the PTC element.

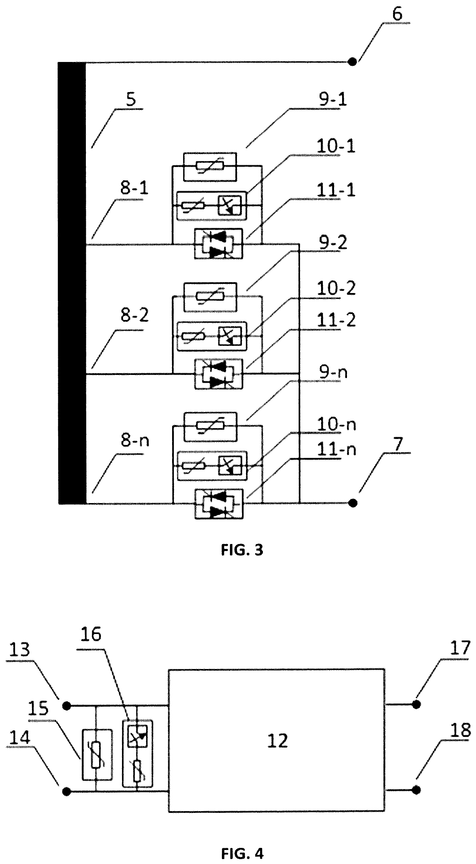

Exemplary application of several circuits according to the invention in a power electronic tap changer is shown schematically in fig. 3. A single phase winding **5** is directly connected to a first transformer single phase contacts **6** and **7.** The winding **5** is equipped with taps **8-1, 8-2 ... 8-n**. Between each of the transformer winding taps **8-1, 8-2 ... 8-n** and the common line connected to the second transformer single phase contact 7 there is a power electronic switch **11-1, 11-2,** ... **11-n** connected in parallel with an overvoltage protection circuit **10-1, 10-2,** ... **10-n** according to the present invention (here comprising PTC element connected in series to a crowbar) and a MOV overvoltage protection **9-1**, **9-2, ... 9-n.** Only one switch **11-1, 11-2,** ... **11-n** is allowed to be triggered at a time.

In case of overvoltage conditions appearing simultaneously at all the taps triggering of a conventional crowbar circuit would create short circuit conditions between transformer taps for at least one current sinewave halfcycle. Such situation is unacceptable due to short circuit current level. Application of the present invention, namely the use of the overvoltage protection circuit **10-1, 10-2,** ... **10-n** according to the invention, reduces the short circuit duration to acceptable level, safe for the system, while still providing sufficient overvoltage protection and removing overvoltage stress from the MOVs **9-1,9-2,...,9-n.**

Another exemplary application of the circuit according to the invention is presented in fig. 4, showing a power supply unit **12** having two input terminals **13, 14** and two output terminals **17, 18**. A MOV overvoltage protection **15** and an overvoltage protection circuit 16 according to the present invention (here comprising PTC element connected in series to a crowbar) are provided in parallel between the lines of the two input terminals **13, 14,** connecting them and thus providing a combined overvoltage protection, wherein once the overvoltage protection circuit **16** reaches the stage **D** shown in fig. 2 and described above, the MOV overvoltage protection **15** is triggered as an additional overvoltage protection element.

## Claims

1. An overvoltage protection circuit for power electronic devices, the circuit comprising a thermistor being either a positive temperature coefficient thermistor (PTC) or a polymer fuse (CTR), **characterised in that** the thermistor is connected in series with a thyristor crowbar circuit, a triac crowbar circuit or a breakover diode crowbar circuit.

2. A power electronic tap changer comprising at least one overvoltage protection circuit as defined in claim 1.

3. The power electronic tap changer according to claim 2, wherein a single phase winding (5) is directly connected to a first transformer single phase contact (6) and - via a number of transformer winding taps (8-1, 8-2 ... 8-n) - to a second transformer single phase contact (7), whereby between each of the transformer winding taps (8-1, 8-2 ... 8-n) and the common line connected to the second transformer single phase contact (7) there is a power electronic switch (11-1, 11-2, ... 11-n) connected in parallel with an overvoltage protection circuit (10-1, 10-2, ... 10-n) and a MOV overvoltage protection (9-1, 9-2, ... 9-n), said overvoltage protection circuit (10-1, 10-2, ... 10-n) comprising a PTC connected in series to a crowbar circuit.

4. A power supply comprising at least one overvoltage protection circuit as defined in claim 1.

5. The power supply according to claim 4, wherein a power supply unit (12) having two input terminals (13, 14) and two output terminals (17, 18) is provided with a MOV overvoltage protection (15) and an overvoltage protection circuit (16) arranged in parallel between the lines of the two input terminals (13, 14) and connecting the same, said overvoltage protection circuit (16) comprising a PTC connected in series to a crowbar circuit.
